# FASCICULE DE BREVET EUROPEEN

(11) **EP 4 457 646 B1**
(45) Date de publication et mention de la délivrance du brevet: **18.02.2026**
(21) Numéro de dépôt: 22839502.6
(22) Date de dépôt: 22.12.2022
(51) Int. Cl.: G06F 16/28, G06F 16/36, G06F 9/44

(54) **SYSTÈME ET PROCÉDÉ POUR LA GESTION D'UN LAC DE DONNÉES**
SYSTEM UND VERFAHREN ZUR VERWALTUNG EINES DATA LAKE
DATA LAKE MANAGEMENT SYSTEM AND METHOD

(30) Priorité: 31.12.2021 FR 2114727
(43) Date de publication de la demande: 06.11.2024
(73) Titulaire: Alten, 92100 Boulogne-Billancourt (FR)
(72) Inventeur: RAVAINE, Marc, 92100 Boulogne-Billancourt (FR)
(74) Mandataire: Bonnet, Michel
(86) Numéro de dépôt international: PCT/IB2022/062661
(87) Numéro de publication internationale: WO 2023/126791

(56) Documents cités:
- US-A1- 2010 223 223
- US-A1- 2018 373 781
- US-B1- 10 296 913
- QUIX CHRISTOPH ET AL: "Metadata Extraction and Management in Data LakesWith GEMMS", COMPLEX SYSTEMS INFORMATICS AND MODELING QUARTERLY, vol. 9, no. 9, 1 December 2016 (2016-12-01), pages 67 - 83, XP093029768, Retrieved from the Internet <URL:https://pdfs.semanticscholar.org/3d4c/f8eb0ece3bc5fa8719e5ad1ef46d1cfbd29d.pdf> DOI: 10.7250/csimq.2016-9.04
- CHRISTOPHER DE SA ET AL: "DeepDive", SIGMOD RECORD, ACM, NEW YORK, NY, US, vol. 45, no. 1, 2 June 2016 (2016-06-02), pages 60 - 67, XP058262018, ISSN: 0163-5808, DOI: 10.1145/2949741.2949756
- SAMINDA ABEYRUWAN ET AL: "Evolving BioAssay Ontology (BAO): modularization, integration and applications", JOURNAL OF BIOMEDICAL SEMANTICS, BIOMED CENTRAL LTD, LONDON, UK, vol. 5, no. Suppl 1, 3 June 2014 (2014-06-03), pages S5, XP021188732, ISSN: 2041-1480, DOI: 10.1186/2041-1480-5-S1-S5
- ALSERAFI AYMAN ET AL: "Towards Information Profiling: Data Lake Content Metadata Management", 2016 IEEE 16TH INTERNATIONAL CONFERENCE ON DATA MINING WORKSHOPS (ICDMW), IEEE, 12 December 2016 (2016-12-12), pages 178 - 185, XP033055774, DOI: 10.1109/ICDMW.2016.0033
- SAWADOGO PEGDWENDÉ ET AL: "On data lake architectures and metadata management", JOURNAL OF INTELLIGENT INFORMATION SYSTEMS: ARTIFICIALINTELLIGENCE AND DATABASE TECHNOLOGIES, vol. 56, no. 1, 26 June 2020 (2020-06-26), pages 97 - 120, XP037333236, ISSN: 0925-9902, DOI: 10.1007/S10844-020-00608-7
- HELAL AHMED AHMED HELAL@MAIL CONCORDIA CA: "Data Lakes Empowered by Knowledge Graph Technologies", PROCEEDINGS OF THE 27TH ANNUAL INTERNATIONAL CONFERENCE ON MOBILE COMPUTING AND NETWORKING, ACMPUB27, NEW YORK, NY, USA, 9 June 2021 (2021-06-09), pages 2884 - 2886, XP058532100, ISBN: 978-1-4503-8343-1, DOI: 10.1145/3448016.3450584
- SEIPEL DIETMAR ET AL: "Domain-specific languages inPrologfor declarative expert knowledge in rules and ontologies", COMPUTER LANGUAGES, SYSTEMS & STRUCTURES, vol. 51, 1 January 2018 (2018-01-01), pages 102 - 117, XP085291566, ISSN: 1477-8424, DOI: 10.1016/J.CL.2017.06.006
- BELLOMARINI LUIGI ET AL: "Data science with Vadalog: Knowledge Graphs with machine learning and reasoning in practice", FUTURE GENERATION COMPUTER SYSTEMS, ELSEVIER SCIENCE PUBLISHERS. AMSTERDAM, NL, vol. 129, 8 November 2021 (2021-11-08), pages 407 - 422, XP086925268, ISSN: 0167-739X, [retrieved on 20211108], DOI: 10.1016/J.FUTURE.2021.10.021

## Description

### Domaine technique

L'invention concerne le domaine des lacs de données. En particulier, elle concerne un système informatique et un procédé mis en œuvre par informatique pour la gestion d'un lac de données.

### Technique antérieure

L'accroissement du volume des données numériques a permis le développement des technologies liées aux mégadonnées (« Big Data », en anglais).

Le caractère hétérogène de ces données numériques, ainsi que leurs sources diverses, ont nécessité de modifier les manières traditionnelles de stocker les données.

C'est notamment dans ce cadre que l'on a introduit les lacs de données (« Data Lake », en anglais).

Or, dans ces lacs de données, il est difficile d'extraire les relations sémantiques qui peuvent exister entre les champs de données d'un lac de données.

En pratique, dans l'art antérieur, on réalise cette opération manuellement par des experts du domaine. Ce qui est fastidieux et prompt aux erreurs.

Ainsi, il existe un besoin pour extraire automatiquement les relations sémantiques qui peuvent exister entre les champs de données d'un lac de données. Le document antérieur QUIX CHRISTOPH ET AL: "Metadata Extraction and Management in Data LakesWith GEMMS",COMPLEX SYSTEMS INFORMATICS AND MODELING QUARTERLY,vol. 9, no. 9 1 décembre 2016 (2016-12-01), pages 67-83,DOI: 10.7250/csimq.2016-9.04 [Extrait de l'Internet: https:// pdfs.semanticscholar.org/3d4c/f8eb0ece3bc5fa8719e5ad1ef46d1cfbd29d.pdf 07-03-2023] décrit un système de gestion de métadonnées générique et extensible pour les lacs de données (appelé GEMMS) qui vise à l'extraction automatique de métadonnées à partir d'une grande variété de sources de données.

### Résumé de l'invention

L'invention vise à résoudre, au moins partiellement, ce besoin.

L'invention vise en particulier un système informatique de gestion d'un lac de données qui comprend une pluralité d'entités de données primaires, chaque entité de données primaires comprenant une pluralité de champs de données.

En particulier, le système comprend :
- un dispositif de stockage de données pour stocker une base de connaissance,
- une unité de génération de descripteur pour générer une pluralité de descripteurs associés à chaque champ de donnée,
- un moteur de règles prédéterminées qui prend en entrée la pluralité de descripteurs et qui génère en sortie, selon une syntaxe déclarative d'un langage de programmation déductif du type Prolog, une représentation de la pluralité de descripteurs sous la forme de données syntaxiques, les données syntaxiques décrivant des liens sémantiques ou logiques entre les champs de données et/ou les entités de données primaires, la représentation formant la base de connaissance.

Dans un premier mode de réalisation, l'unité de génération de descripteur est configurée pour générer des descripteurs qui sont spécifiques à un type de donnée du champ de donnée.

Dans une deuxième mode de réalisation, chacune des règles prédéterminées du moteur de règles prédéterminées définit au moins une action de modification de la base de connaissance.

Dans une première mise en œuvre du deuxième mode de réalisation, l'action de modification de la base de connaissance est choisie parmi : l'ajout ou la suppression d'un fait d'un langage de programmation déductif du type Prolog, l'ajout d'une règle d'un langage de programmation déductif du type Prolog.

Dans une deuxième mise en œuvre du deuxième mode de réalisation, le moteur de règles prédéterminées est en outre configuré pour mettre en œuvre l'action de modification de certaines des règles prédéterminées lorsqu'au moins une condition prédéterminée est satisfaite.

Dans un premier exemple de la deuxième mise en œuvre du deuxième mode de réalisation, la condition prédéterminée comprend la vérification de la présence d'un « fait » ou d'une « règle » avant son ajout.

Dans un deuxième exemple de la deuxième mise en œuvre du deuxième mode de réalisation, le moteur de règles prédéterminées utilise un moteur d'inférence d'un langage de programmation déductif du type Prolog, qui prend en entrée la base de connaissance pour déterminer en sortie si une condition prédéterminée est satisfaite.

L'invention couvre également un procédé mis en œuvre par ordinateur pour la gestion d'un lac de données qui comprend une pluralité d'entités de données primaires, chaque entité de données primaires comprenant une pluralité de champs de données.

En particulier, le procédé comprend :
- une première étape de fourniture d'un dispositif de stockage de données pour stocker une base de connaissance,
- une deuxième étape de fourniture d'une unité de génération de descripteur pour générer une pluralité de descripteurs associés à chaque champ de donnée,
- une troisième étape de fourniture d'un moteur de règles prédéterminées qui prend en entrée la pluralité de descripteurs et qui génère en sortie, selon une syntaxe déclarative d'un langage de programmation déductif du type Prolog, une représentation de la pluralité de descripteurs sous la forme de données syntaxiques, les données syntaxiques décrivant des liens sémantiques ou logiques entre les champs de données et/ou les entités de données primaires, la représentation formant la base de connaissance.

### Brève description des dessins

D'autres caractéristiques et avantages de l'invention seront mieux compris à la lecture de la description qui va suivre et en référence aux dessins annexés, donnés à titre illustratif et nullement limitatif.
[Fig.1] La [Fig.1] représente un mode de réalisation d'un système selon l'invention.
[Fig.2] La [Fig.2] représente un mode de réalisation d'un procédé selon l'invention.

Sur les différentes figures, les traits et flèches en pointillés indiquent des éléments, des étapes et des enchaînements facultatifs ou optionnels.

### Description des modes de réalisation

L'un des objectifs de cette invention est de fournir un outil objectif et reproductible pour extraire automatiquement les relations sémantiques qui peuvent exister entre les champs de données d'un lac de données.

Pour cela, l'art antérieur propose de réaliser manuellement cette opération par des experts du domaine.

Or, une telle solution est fastidieuse et prompte aux erreurs.

Aussi, les inventeurs proposent d'utiliser les capacités des langages de programmation déductifs du type Prolog pour créer automatiquement une base de connaissance à partir de descripteurs des champs de données du lac de données.

Cette solution est plus rapide que dans l'art antérieur et moins sujette aux erreurs.

Ainsi, l'invention concerne un système informatique de gestion d'un lac de données.

Dans l'invention, on entend par lac de données (« data lake », en anglais) un espace de stockage où l'on rassemble des données sous leur forme naturelle, qu'elles soient brutes ou transformées. Et ce, dans un objectif d'analyse (p. ex. l'établissement de comptes rendus, de visualisations ou de structures analytiques) ou d'action (p. ex. apprentissage machine).

Par ailleurs, le lac de données comprend une pluralité d'entités de données primaires sous différentes formes telles que des données structurées (p. ex. des bases de données qui comprennent des lignes et des colonnes), des données semi-structurées (p. ex. des fichiers du type CSV, logs, XML ou JSON), des données non structurées (p. ex. des emails, des fichiers PDF), et des données binaires (p. ex. des fichiers images, audios ou vidéos).

En outre, chaque entité de données primaire comprend une pluralité de champs de données.

De manière connue, chaque champ de données possède un type de données qui peut être choisi parmi : les types numériques, les types temporels et les types chaînes de caractères.

Dans un premier exemple, lorsque le type de donnée est numérique, celui-ci peut être choisi parmi les types numériques définis dans les normes associées aux bases de données relationnelles du type SQL, tels qu'un entier ou un nombre décimal et toutes combinaisons de ceux-ci.

Toutefois, selon les données disponibles, on pourra utiliser d'autres types numériques, et ce, sans nécessiter de modifications substantielles de l'invention.

Dans un deuxième exemple, lorsque le type de donnée est temporel, celui-ci peut être choisi parmi les types temporels définis dans les normes associées aux bases de données relationnelles du type SQL, tels qu'une date, une heure, un jour, une année, une minute, une seconde et toutes combinaisons de celles-ci.

Toutefois, selon les données disponibles, on pourra utiliser d'autres types temporels, et ce, sans nécessiter de modifications substantielles de l'invention.

Dans un troisième exemple, lorsque le type de donnée est une chaîne de caractères, celui-ci peut être choisi parmi les types de chaînes de caractères définis dans les normes associées aux bases de données relationnelles du type SQL, tels qu'une chaîne en ASCII, une chaîne binaire, une énumération et toutes combinaisons de celles-ci.

Toutefois, selon les données disponibles, on pourra utiliser d'autres types de chaînes de caractères, et ce, sans nécessiter de modifications substantielles de l'invention.

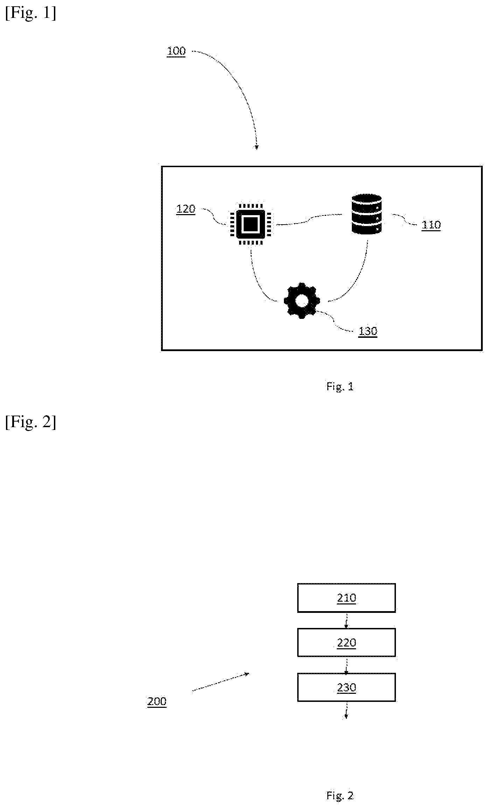

De retour à l'invention, comme illustré dans l'exemple de la [Fig.1], le système informatique comprend un dispositif de stockage de données 110, une unité de génération de descripteur 120 et un moteur de règles prédéterminées 130.

Le dispositif de stockage de données 110 est configuré pour stocker une base de connaissance.

Dans l'invention, la base de connaissance regroupe les connaissances liées aux champs de données du lac de données, sous une forme exploitable par un ordinateur.

L'unité de génération de descripteur 120 est configurée pour générer une pluralité de descripteurs associés à chaque champ de donnée.

Dans l'invention, un descripteur correspond à un ensemble de métriques qui servent à décrire les champs de données du lac de données.

De préférence, l'unité de génération de descripteur 120 comprend au moins un processeur pour calculer les métriques.

Dans une mise en œuvre particulière de l'unité de génération de descripteur 120, celle-ci est configurée pour générer des descripteurs qui sont spécifiques à un type de donnée du champ de donnée.

Dans un premier mode de réalisation, l'unité de génération de descripteur 120 est configurée pour générer des descripteurs de champs de champs de données des types numériques.

Dans ce cas, par exemple, les descripteurs peuvent être choisis parmi des grandeurs mathématiques ou des grandeurs statistiques de type connu.

Dans un deuxième mode de réalisation, l'unité de génération de descripteur 120 est configurée pour générer des descripteurs de champs de champs de données des types temporels.

Dans ce cas, par exemple, les descripteurs peuvent être des grandeurs temporelles de type connu.

Dans un troisième mode de réalisation, l'unité de génération de descripteur 120 est configurée pour générer des descripteurs de champs de champs de données des types chaînes de caractères.

Dans ce cas, par exemple, les descripteurs peuvent être des résultats d'une analyse syntaxique et/ou sémantique (p. ex. la similarité).

Le moteur de règles prédéterminées 130 est configuré pour générer une représentation de la pluralité de descripteurs de manière à former la base de connaissance.

En particulier, le moteur de règles prédéterminées 130 prend en entrée la pluralité de descripteurs et génère en sortie, selon une syntaxe déclarative d'un langage de programmation déductif du type Prolog, une représentation de la pluralité de descripteurs sous la forme de données syntaxiques.

De manière connue, les langages de programmation déductifs du type Prolog se basent sur le calcul de prédicats logiques de 1^{er} ordre, ce qui rend compte de la façon humaine de raisonner (p. ex. pour établir une démonstration mathématique).

Par ailleurs, les langages de programmation déductifs du type Prolog utilisent des formules logiques particulières dites clauses de Horn.

Dans l'invention, on utilisera de préférence les clauses de Horn, dites « faits » et « règles ».

En pratique, un « fait » est un prédicat que l'on considère comme vrai.

Par exemple, le « fait » suivant décrit le fait que Socrate est un être humain : est_un_être_humain(Socrate).

Dans un autre exemple, le « fait » suivant décrit le fait qu'un champ de donnée 'col5' est du type chaîne de caractère avec une taille de sept caractères:
est_une_châine_de_caractère_de_taille_7(col5).

Par ailleurs, une « règle » est un prédicat qui définit une relation entre une conjonction de prémisses et une conclusion.

Par exemple, la « règle » suivante décrit une relation entre le fait d'être un être humain et le fait d'être mortel :
est_mortel(Individu) :- est_un_être_humain(Individu).

Dans un autre exemple, la « règle » suivante décrit une relation entre le fait que deux champs de données de même taille sont potentiellement similaires :
chaînes_de_caractère_potentiellement_similaires(Chaîne1, Chaîne2) :-est_une_châine_de_caractère_de_taille_7(Chaîne1),
est_une_châine_de_caractère_de_taille_7(Chaîne2).

En pratique, les données syntaxiques décrivent des liens sémantiques ou logiques entre les champs de données et/ou les entités de données primaires.

Dit autrement, un langage de programmation déductif du type Prolog peut prendre en entrée les données syntaxiques pour déduire une ou plusieurs relations sémantiques ou logiques entre des champs de données et/ou les entités de données primaires.

Par exemple, on pourra déduire que la ou les clés primaires d'une entité de données primaires ou encore identifier les champs de données qui présentent des données similaires.

Dans une mise en œuvre particulière du moteur de règles prédéterminées 130, chacune des règles prédéterminées définit au moins une action de modification de la base de connaissance.

Dans un premier mode de réalisation de la mise en œuvre particulière du moteur de règles prédéterminées 130, l'action de modification de la base de connaissance correspond à un ajout d'un « fait » d'un langage de programmation déductif du type Prolog.

Dans un deuxième mode de réalisation de la mise en œuvre particulière du moteur de règles prédéterminées 130, l'action de modification de la base de connaissance correspond à la suppression d'un « fait » d'un langage de programmation déductif du type Prolog.

Dans un troisième mode de réalisation de la mise en œuvre particulière du moteur de règles prédéterminées 130, l'action de modification de la base de connaissance correspond à un ajout d'une « règle » d'un langage de programmation déductif du type Prolog.

Dans un quatrième mode de réalisation de la mise en œuvre particulière du moteur de règles prédéterminées 130, l'action de modification de la base de connaissance correspond à la suppression d'une « règle » d'un langage de programmation déductif du type Prolog.

Dans la mise en œuvre particulière du moteur de règles prédéterminées 130, le moteur de règles prédéterminées 130 est en outre configuré pour mettre en œuvre l'action de modification de certaines des règles prédéterminées lorsqu'au moins une condition prédéterminée est satisfaite.

Dans un premier exemple, la condition prédéterminée comprend la vérification de la présence d'un fait ou d'une règle avant son ajout.

Dans un deuxième exemple, le moteur de règles prédéterminées 130 utilise un moteur d'inférence d'un langage de programmation déductif du type Prolog, qui prend en entrée la base de connaissance pour déterminer en sortie si une condition prédéterminée est satisfaite.

L'invention couvre également un procédé mis en œuvre par ordinateur pour la gestion d'un lac de données.

Ainsi, comme illustré dans l'exemple de la [Fig.2], le procédé de gestion 200 comprend une première étape de fourniture 210, une deuxième étape de fourniture 220 et troisième étape de fourniture 230.

Tout d'abord, la première étape de fourniture 210 du procédé de gestion 200 comprend la fourniture d'un dispositif de stockage de données pour stocker une base de connaissance, tel que décrit ci-dessus.

Ensuite, la deuxième étape de fourniture 220 du procédé de gestion 200 comprend la fourniture d'une unité de génération de descripteur pour générer une pluralité de descripteurs associés à chaque champ de donnée, tel que décrit ci-dessus.

Enfin, tel que décrit ci-dessus, la troisième étape de fourniture 230 du procédé de gestion 200 comprend la fourniture d'un moteur de règles prédéterminées qui prend en entrée la pluralité de descripteurs et qui génère en sortie, selon une syntaxe déclarative d'un langage de programmation déductif du type Prolog, une représentation de la pluralité de descripteurs sous la forme de données syntaxiques, les données syntaxiques décrivant des liens sémantiques ou logiques entre les champs de données et/ou les entités de données primaires, la représentation formant la base de connaissance.

## Revendications

1. Système informatique (100) de gestion d'un lac de données comprenant une pluralité d'entités de données primaires, chaque entité de données primaires comprenant une pluralité de champs de données, ladite gestion consistant à extraire des liens sémantiques ou logiques pouvant exister entre lesdits champs de données et/ou lesdites entités de données primaires, le système comprenant :
- un dispositif de stockage de données (110) pour stocker une base de connaissance,
- une unité de génération de descripteur (120) pour générer une pluralité de descripteurs comprenant chacun un ensemble de métriques qui servent à décrire les champs de données, ladite unité comprenant au moins un processeur de calcul desdites métriques de descripteurs pour chaque champ de donnée,
- un moteur de règles prédéterminées (130) qui prend en entrée la pluralité de descripteurs et qui génère en sortie par application des règles prédéterminées à la pluralité de descripteurs, selon une syntaxe déclarative d'un langage de programmation déductif à calcul de prédicats logiques de 1^{er} ordre et à clauses de Horn, une représentation de la pluralité de descripteurs sous la forme de données syntaxiques décrivant des liens sémantiques ou logiques entre les champs de données et/ou les entités de données primaires, la représentation générée formant la base de connaissance.

2. Système selon la revendication 1, dans lequel l'unité de génération de descripteur (120) est configurée pour générer des descripteurs qui sont chacun spécifiques à un type de donnée parmi les types de données possibles des champs de données.

3. Système selon l'une quelconque des revendications 1 à 2, dans lequel chacune des règles prédéterminées du moteur de règles prédéterminées (130) définit au moins une action de modification de la base de connaissance.

4. Système selon la revendication 3, dans lequel l'action de modification de la base de connaissance est choisie parmi : l'ajout ou la suppression d'un fait du langage de programmation déductif, l'ajout d'une règle du langage de programmation déductif.

5. Système selon l'une quelconque des revendications 3 à 4, dans lequel le moteur de règles prédéterminées (130) est en outre configuré pour mettre en œuvre l'action de modification de certaines des règles prédéterminées lorsqu'au moins une condition prédéterminée est satisfaite.

6. Système selon la revendication 5 lorsqu'elle dépend de la revendication 4, dans lequel la condition prédéterminée comprend la vérification de la présence d'un « fait » ou d'une « règle » avant son ajout.

7. Système selon l'une quelconque des revendications 5 à 6, dans lequel le moteur de règles prédéterminées (130) utilise un moteur d'inférence du langage de programmation déductif, qui prend en entrée la base de connaissance pour déterminer en sortie si une condition prédéterminée est satisfaite.

8. Procédé (200) mis en œuvre par ordinateur pour la gestion d'un lac de données comprenant une pluralité d'entités de données primaires, chaque entité de données primaires comprenant une pluralité de champs de données, ladite gestion consistant à extraire des liens sémantiques ou logiques pouvant exister entre lesdits champs de données et/ou lesdites entités de données primaires, le procédé comprenant :
- une première étape de fourniture (210) d'un dispositif de stockage de données pour stocker une base de connaissance,
- une deuxième étape de fourniture (220) d'une unité de génération de descripteur pour générer une pluralité de descripteurs comprenant chacun un ensemble de métriques qui servent à décrire les champs de données et comprenant au moins un processeur de calcul desdites métriques de descripteurs pour chaque champ de donnée,
- une troisième étape de fourniture (230) d'un moteur de règles prédéterminées qui prend en entrée la pluralité de descripteurs et qui génère en sortie par application des règles prédéterminées à la pluralité de descripteurs, selon une syntaxe déclarative d'un langage de programmation déductif à calcul de prédicats logiques de 1^{er} ordre et à clauses de Horn, une représentation de la pluralité de descripteurs sous la forme de données syntaxiques décrivant des liens sémantiques ou logiques entre les champs de données et/ou les entités de données primaires, la représentation générée formant la base de connaissance.

## Patentansprüche

1. Computersystem (100) zum Verwalten eines Data Lake, der eine Vielzahl von primären Dateneinheiten umfasst, wobei jede primäre Dateneinheit eine Vielzahl von Datenfeldern umfasst, wobei das Verwalten darin besteht, semantische oder logische Verbindungen zu extrahieren, die zwischen den Datenfeldern und/oder den primären Dateneinheiten bestehen können, wobei das System Folgendes umfasst:
- eine Datenspeichervorrichtung (110) zum Speichern einer Wissensdatenbank,
- eine Deskriptorerzeugungseinheit (120) zum Erzeugen einer Vielzahl von Deskriptoren, die jeweils einen Satz von Metriken umfassen, die zum Beschreiben der Datenfelder dienen, wobei die Einheit mindestens einen Prozessor zum Berechnen der Deskriptormetriken für jedes Datenfeld umfasst,
- eine Engine für vorbestimmte Regeln (130), die die Vielzahl von Deskriptoren als Eingabe benutzt und durch Anwendung der vorbestimmten Regeln auf die Vielzahl von Deskriptoren gemäß einer deklarativen Syntax einer deduktiven Programmiersprache mit Berechnung logischer Prädikate erster Ordnung und Horn-Klauseln eine Darstellung der Vielzahl von Deskriptoren in Form von syntaktischen Daten als Ausgabe erzeugt, die semantische oder logische Verbindungen zwischen den Datenfeldern und/oder den primären Dateneinheiten beschreiben, wobei die erzeugte Darstellung die Wissensdatenbank bildet.

2. System nach Anspruch 1, wobei die Deskriptorerzeugungseinheit (120) so konfiguriert ist, dass sie Deskriptoren erzeugt, die jeweils spezifisch für einen Datentyp unter den möglichen Datentypen der Datenfelder sind.

3. System nach einem der Ansprüche 1 bis 2, wobei jede der vorbestimmten Regeln der Engine für vorbestimmte Regeln (130) mindestens eine Änderungsaktion der Wissensdatenbank definiert.

4. System nach Anspruch 3, wobei die Änderungsaktion der Wissensdatenbank ausgewählt ist aus: Hinzufügen oder Entfernen eines Fakts der deduktiven Programmiersprache, Hinzufügen einer Regel der deduktiven Programmiersprache.

5. System nach einem der Ansprüche 3 bis 4, wobei die Engine für vorbestimmte Regeln (130) ferner so konfiguriert ist, dass sie die Änderungsaktion einiger der vorbestimmten Regeln durchführt, wenn mindestens eine vorbestimmte Bedingung erfüllt ist.

6. System nach Anspruch 5, wenn er von Anspruch 4 abhängt, wobei die vorbestimmte Bedingung das Überprüfen des Vorhandenseins eines "Fakts" oder einer "Regel" vor dessen Hinzufügen umfasst.

7. System nach einem der Ansprüche 5 bis 6, wobei die Engine für vorbestimmte Regeln (130) eine Inferenzengine der deduktiven Programmiersprache verwendet, die als Eingabe die Wissensdatenbank benutzt, um als Ausgabe zu bestimmen, ob eine vorbestimmte Bedingung erfüllt ist.

8. Computergestütztes Verfahren (200) zum Verwalten eines Data Lake, der eine Vielzahl von primären Dateneinheiten umfasst, wobei jede primäre Dateneinheit eine Vielzahl von Datenfeldern umfasst, wobei das Verwalten darin besteht, semantische oder logische Verbindungen zu extrahieren, die zwischen den Datenfeldern und/oder den primären Dateneinheiten bestehen können, wobei das Verfahren Folgendes umfasst:
- einen ersten Schritt (210) des Bereitstellens einer Datenspeichervorrichtung zum Speichern einer Wissensdatenbank,
- einen zweiten Schritt (220) des Bereitstellens einer Deskriptorerzeugungseinheit, um eine Vielzahl von Deskriptoren zu erzeugen, die jeweils einen Satz von Metriken umfassen, die zum Beschreiben der Datenfelder dienen, und die mindestens einen Prozessor zum Berechnen der Deskriptormetriken für jedes Datenfeld umfassen,
- einen dritten Schritt des Bereitstellens (230) einer Engine für vorbestimmte Regeln, die die Vielzahl von Deskriptoren als Eingabe benutzt und durch Anwendung der vorbestimmten Regeln auf die Vielzahl von Deskriptoren gemäß einer deklarativen Syntax einer deduktiven Programmiersprache mit Berechnung logischer Prädikate erster Ordnung und Horn-Klauseln eine Darstellung der Vielzahl von Deskriptoren in Form von syntaktischen Daten als Ausgabe erzeugt, die semantische oder logische Verbindungen zwischen den Datenfeldern und/oder den primären Dateneinheiten beschreiben, wobei die erzeugte Darstellung die Wissensdatenbank bildet.

## Claims

1. A computer system (100) for managing a data lake that comprises a plurality of primary data entities, each primary data entity comprising a plurality of data fields, said management consisting of extracting semantic or logical links that may exist between said data fields and/or said primary data entities, the system comprising:
- a data storage device (110) for storing a knowledge base,
- a descriptor generation unit (120) for generating a plurality of descriptors each comprising a set of metrics that serve to describe the data fields, said unit comprising at least one processor for computing said descriptor metrics for each data field,
- a predetermined rules engine (130) that takes the plurality of descriptors as input and generates as output, by applying the predetermined rules to the plurality of descriptors, according to a declarative syntax of a deductive programming language with first-order logical predicate calculus and Horn clauses, a representation of the plurality of descriptors in the form of syntactic data describing semantic or logical links between data fields and/or primary data entities, the generated representation forming the knowledge base.

2. The system according to claim 1, wherein the descriptor generation unit (120) is configured to generate descriptors that are each specific to one type of data among the possible types of data of the data fields.

3. The system according to any of claims 1 to 2, wherein each of the predetermined rules of the predetermined rules engine (130) defines at least one knowledge base modification action.

4. The system according to claim 3, wherein the knowledge base modification action is selected from: adding or deleting a fact from the deductive programming language, adding a rule to the deductive programming language.

5. The system according to any one of claims 3 to 4, wherein the predetermined rules engine (130) is further configured to implement the action of modifying some of the predetermined rules when at least one predetermined condition is satisfied.

6. The system according to claim 5 when dependent on claim 4, wherein the predetermined condition comprises verifying the presence of a "fact" or "rule" before adding it.

7. The system according to any one of claims 5 to 6, wherein the predetermined rules engine (130) uses a deductive programming language inference engine, which takes the knowledge base as input to determine as output whether a predetermined condition is satisfied.

8. A computer-implemented method (200) for managing a data lake that comprises a plurality of primary data entities, each primary data entity comprising a plurality of data fields, said management consisting of extracting semantic or logical links that may exist between said data fields and/or said primary data entities, the method comprising:
- a first step for providing (210) a data storage device for storing a knowledge base,
- a second step for providing (220) a descriptor generation unit for generating a plurality of descriptors, each comprising a set of metrics that serve to describe the data fields and comprising at least one processor for computing said descriptor metrics for each data field,
- a third step for providing (230) a predetermined rules engine that takes the plurality of descriptors as input and generates as output, by applying the predetermined rules to the plurality of descriptors, according to a declarative syntax of a deductive programming language with first-order logical predicate calculus and Horn clauses, a representation of the plurality of descriptors in the form of syntactic data describing semantic or logical links between data fields and/or primary data entities, the generated representation forming the knowledge base.
